# EUROPÄISCHE PATENTSCHRIFT

(11) **EP 1 797 305 B1**
(45) Veröffentlichungstag und Bekanntmachung des Hinweises auf die Patenterteilung: **15.07.2009**
(21) Anmeldenummer: 05792100.9
(22) Anmeldetag: 15.09.2005
(51) Int. Cl.: F02D 41/00, F02D 41/34, F02D 13/02

(54) **VERFAHREN UND VORRICHTUNG ZUM STEUERN EINER BRENNKRAFTMASCHINE**
METHOD AND DEVICE FOR CONTROLLING AN INTERNAL COMBUSTION ENGINE
PROCEDE ET DISPOSITIF POUR COMMANDER UN MOTEUR A COMBUSTION INTERNE

(30) Priorität: 06.10.2004 DE 102004048704
(43) Veröffentlichungstag der Anmeldung: 20.06.2007
(73) Patentinhaber: Continental Automotive GmbH, 30165 Hannover (DE)
(72) Erfinder: WEISS, Frank, 93080 Pentling/Grasslfing (DE); ZHANG, Hong, 93105 Tegernheim (DE)
(86) Internationale Anmeldenummer: PCT/EP2005/054596
(87) Internationale Veröffentlichungsnummer: WO 2006/037720

(56) Entgegenhaltungen:
- EP-A- 1 167 703
- EP-A- 1 270 915
- EP-A- 1 312 773
- DE-A1- 10 220 141

## Beschreibung

Die Erfindung betrifft ein Verfahren und eine Vorrichtung zum Steuern einer Brennkraftmaschine.

An Brennkraftmaschinen werden zunehmend hohe Anforderungen bezüglich deren Leistung und Wirkungsgrad gestellt. Gleichzeitig müssen aufgrund strenger gesetzlicher Vorschriften auch die Schadstoff-Emissionen gering sein. Zu diesem Zweck ist bekannt, Brennkraftmaschinen mit Verstelleinrichtungen zum Einstellen einer Ventilüberschneidung zwischen den Gaseinlassventilen und den Gasauslassventilen vorzusehen. Auf diese Weise kann das insgesamt abgegebene Drehmoment der Brennkraftmaschine erhöht werden und eine Verringerung der Emissionen erreicht werden. Unter einer Ventilüberschneidung ist derjenige Winkelbereich zu verstehen - ausgedrückt in Kurbelwellenwinkel oder Nockenwellenwinkel - während dessen sowohl das jeweilige Gaseinlassventil als auch das jeweilige Gasauslassventil einen entsprechenden Einlass beziehungsweise Auslass des Zylinders freigeben.

Ferner sind Brennkraftmaschinen bekannt, bei denen die einzelnen Zylinder in zwei Bänken angeordnet sind. Solche Brennkraftmaschinen werden auch als V-Motoren bezeichnet. Bei derartigen V-Motoren sind beispielsweise drei Zylinder auf einer Zylinderbank und weitere drei Zylinder auf einer weiteren Zylinderbank angeordnet. Neben dem emissionsarmen Betrieb und einem hohen Drehmoment, das durch derartige Brennkraftmaschinen abgegeben werden soll, ist es auch eine Herausforderung derartige Brennkraftmaschinen so auszubilden, dass ein komfortabler Betrieb möglich ist.

Die Aufgabe der Erfindung ist es ein Verfahren und eine Vorrichtung zum Steuern einer Brennkraftmaschine mit zwei Zylinderbänken zu schaffen, die beziehungsweise das einen komfortablen Betrieb der Brennkraftmaschine ermöglicht.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich gemäß eines ersten Aspekts aus durch ein Verfahren und eine entsprechende Vorrichtung zum Steuern einer Brennkraftmaschine mit einer ersten und zweiten Zylinderbank, die jeweils aufweisen eine Nockenwelle für Gaseinlassventile und eine weitere für Gasauslassventile, der der jeweiligen Zylinderbank zugeordneten Zylinder. Die Zylinderbänke weisen ferner jeweils eine Verstelleinrichtung zum Einstellen einer Ventilüberschneidung zwischen den Gaseinlassventilen und den Gasauslassventilen auf. Jeder Zylinderbank ist ein Lambdaregler zugeordnet, dessen Reglerstellgröße auf mindestens ein Stellglied einwirkt, das der jeweiligen Zylinderbank zugeordnet ist. In mindestens einer Betriebssituation, in der die Ventilüberschneidung derart gering ist, dass sie keinen Einfluss auf die Reglerstellgrößen hat, werden Werte der Reglerstellgrößen als Nicht-Ventilüberschneidungswerte der ersten und der zweiten Zylinderbank erfasst. Kein Einfluss ist in diesem Zusammenhang so zu verstehen, dass die Ventilüberschneidung einen vernachlässigbaren Einfluss auf die Reglerstellgrößen hat. In mindestens einer weiteren Betriebssituation, in der die Ventilüberschneidung derart groß ist, dass sie einen Einfluss auf die Reglerstellgrößen hat, werden Werte der Reglerstellgrößen als Ventilüberschneidungswerte der ersten und der zweiten Zylinderbank erfasst. In diesem Zusammenhang ist ein Einfluss der Ventilüberschneidung auf die Reglerstellgrößen so zu verstehen, dass eine ungewollt fehlerhafte Ventilüberschneidung einen relevanten Einfluss auf die Reglerstellgröße hat und somit zu einer ungewollt veränderten Luftmasse in den jeweiligen Zylindern der jeweiligen Zylinderbank führt.

Abhängig von den Ventilüberschneidungswerten und den Nicht-Ventilüberschneidungswerten der ersten und der zweiten Zylinderbank wird ein Korrekturwert für die Verstelleinrichtung ermittelt, die der ersten Zylinderbank zugeordnet ist. Zusätzlich oder alternativ wird ein Korrekturwert für die Verstelleinrichtung ermittelt, die der zweiten Zylinderbank zugeordnet ist und zwar ebenfalls abhängig von den Ventilüberschneidungswerten und den Nicht-Ventilüberschneidungswerten der ersten und der zweiten Zylinderbank. Die Verstelleinrichtung der ersten und/oder der zweiten Zylinderbank werden dann abhängig von den ihnen zugeordneten Korrekturwerten angesteuert. Als Stellglieder kommen insbesondere die der jeweiligen Zylinderbank zugeordneten Einspritzventile in Frage, es kann sich bei den Stellgliedern jedoch auch um andere Stellglieder handeln, wie zum Beispiel ein Impulsladeventil.

Die Erfindung nutzt die Erkenntnis, dass die Verstelleinrichtung, eine regelmäßig vorhandene Übertragereinheit zwischen der Kurbelwelle der Brennkraftmaschine und der jeweiligen Nockenwellen und regelmäßige vorhandene Sensorik zum Erfassen der jeweiligen Winkel der Kurbelwellen beziehungsweise der Nockenwellen Einbautoleranzen, Veränderungen ihrer Eigenschaften während des Betriebs der Brennkraftmaschine und dergleichen unterliegen. Derartige Ungenauigkeiten können hinsichtlich der ersten und der zweiten Zylinderbank unterschiedlich ausgebildet sein. Dies kann dann zu unterschiedlichen Luftmassen in den Zylinder der ersten Zylinderbank einerseits und den Zylindern der zweiten Zylinderbank andererseits führen. Dies hat wiederum zur Folge, dass die Drehmomente, die durch die Verbrennung eines Luft/Kraftstoff-Gemisches in den jeweiligen Zylindern auf die Kurbelwelle übertragen werden, sich von Zylinderbank zu Zylinderbank unterscheiden können. Dies hat dann einen unruhigen und unkomfortablen Lauf der Brennkraftmaschine zur Folge. Erfindungsgemäß werden derartige Ungenauigkeiten anhand der Reglerstellgrößen der jeweiligen Lambdaregler erkannt. Durch das Berücksichtigen von Werten der Reglerstellgrößen als Nicht-Ventilüberschneidungswerte der ersten und der zweiten Zylinderbank in der Betriebssituation, in der die Ventilüberschneidung derart gering ist, dass sie keinen Einfluss auf die Reglerstellgrößen hat, wird sichergestellt, dass andere Einflussgrößen, die sich auf die Reglerstellgrößen auswirken, kompensiert werden und somit nicht fehlerhaft auf Ungenauigkeiten im Bereich der tatsächlichen Einstellung der Ventilüberschneidung zurückgeführt werden. Der oder die Korrekturwerte können dann geeignet so ermittelt werden, dass ein Angleichen der tatsächlich über den Zylindern der ersten Zylinderbank und der zweiten Zylinderbank eingestellten Ventilüberschneidung erfolgt und somit auch die in die jeweiligen Zylinder strömenden Luftmassen angeglichen sind. Dies führt zu einer sehr hohen Drehmomentgleichförmigkeit zwischen den Zylinderbänken und somit zu einem sehr komfortablen Lauf der Brennkraftmaschine. Darüber hinaus werden so die Reglerstellgrößen der jeweiligen Lambdaregler zusätzlich genutzt. Derartige Brennkraftmaschinen sind, wenn sie mit Benzin betrieben werden, regelmäßig mit Lambdareglern ausgestattet. Somit stehen auch die Reglerstellgrößen ohnehin als Rechengrößen in einer entsprechenden Vorrichtung zum Steuern der Brennkraftmaschine zur Verfügung.

Gemäß eines zweiten Aspekts zeichnet sich die Erfindung aus durch ein Verfahren und eine entsprechende Vorrichtung zum Steuern einer Brennkraftmaschine mit einer ersten und zweiten Zylinderbank, die jeweils aufweisen eine Nockenwelle für die Gaseinlassventile und eine für die Gasauslassventile, der der jeweiligen Zylinderbank zugeordneten Zylinder. Die erste und zweite Zylinderbank weisen ferner jeweils auf eine Verstelleinrichtung zum Einstellen einer Ventilüberschneidung zwischen den Gaseinlassventilen und den Gasauslassventilen. Im Unterschied zu dem ersten Aspekt der Erfindung wird in mindestens einer Betriebssituation, in der die Ventilüberschneidung derart gering ist, dass sie keinen Einfluss auf das Drehmoment hat, das durch die Verbrennung des Luft/Kraftstoff-Gemisches in den Zylindern auf die Kurbelwelle übertragen wird, Werte einer für das durch die erste Zylinderbank und andererseits durch die zweite Zylinderbank erzeugte Drehmoment repräsentativen Größe erfasst als Nicht-Ventilüberschneidungswerte der ersten und der zweiten Zylinderbank. Ferner werden in mindestens einer weiteren Betriebssituation, in der die Ventilüberschneidung derart groß ist, dass sie eine Einfluss auf das Drehmoment hat, das durch die Verbrennung des Luft/Kraftstoff-Gemisches in den Zylindern auf die Kurbelwelle übertragen wird, Werte der für das durch die erste Zylinderbank und andererseits durch die zweite Zylinderbank erzeugte Drehmoment repräsentativen Größen erfasst werden als Ventilüberschneidungswerte der ersten und zweiten Zylinderbank. Auch auf diese Weise kann ein einfaches Gleichstellen der Drehmomente erreicht werden, die von den jeweiligen Zylinderbänken erzeugt werden.

In einer vorteilhaften Ausgestaltung der Erfindung wird das Erfassen der Nicht-Ventilüberschneidungswerte und der Ventilüberschneidungswerte gestartet, wenn die Reglerstellgrößen der ersten und zweiten Zylinderbank um einen vorgegebenen Lambda-Schwellenwert voneinander abweichen. Auf diese Weise kann der Rechenaufwand insgesamt gering gehalten werden und dennoch über die Betriebsdauer der Brennkraftmaschine eine gute Gleichstellung der von den jeweiligen Zylinderbänken abgegebenen Drehmomente erreicht werden bei geeigneter Wahl des Lambda-Schwellenwertes.

Gemäß einer weiteren vorteilhaften Ausgestaltung der Erfindung wird das Erfassen der Ventilüberschneidungswerte und der Nicht-Ventilüberschneidungswerte gestartet, wenn die Werte, der für das durch die erste Zylinderbank und andererseits durch die zweite Zylinderbank erzeugte Drehmoment repräsentativen Größe, einen vorgegebenen Drehmoment-Schwellenwert voneinander abweichen. Auch auf diese Weise kann der Rechenaufwand insgesamt gering gehalten werden bei einer dennoch guten Gleichstellung der von den jeweiligen Zylinderbänken erzeugten Drehmomente bei geeigneter Wahl des Drehmoment-Schwellenwertes.

Gemäß einer weiteren vorteilhaften Ausgestaltung der Erfindung wird die Größe, die repräsentativ ist für das durch die erste Zylinderbank und andererseits durch die zweite Zylinderbank erzeugte Drehmoment, ein Drehzahlgradient gewählt. Dies hat den Vorteil, dass dieser einfach zu ermitteln ist und die Drehzahl für andere Steuerungszwecke ohnehin erfasst wird.

Gemäß einer weiteren vorteilhaften Ausgestaltung der Erfindung werden Korrekturwerte abhängig von gemittelten Ventilüberschneidungswerten und Nicht-Ventilüberschneidungswerten berechnet, die über eine vorgegebene Anzahl oder während einer vorgegebenen Zeitdauer erfassten Ventilüberschneidungswerte oder Nicht-Ventilüberschneidungswerte gemittelt sind. Auf diese Weise kann die Korrektur noch genauer erfolgen.

Gemäß einer weiteren vorteilhaften Ausgestaltung der Erfindung erfolgt das Korrigieren der Ansteuerung der Verstelleinrichtung oder der Verstelleinrichtungen adaptiv.

Ausführungsbeispiele der Erfindung sind im folgenden anhand der schematischen Zeichnungen erläutert. Es zeigen:
- Figur 1: eine Brennkraftmaschine mit einer Steuervorrichtung,
- Figur 2: eine weitere Ansicht von Teilen der Brennkraftmaschine gemäß Figur 1,
- Figur 3: Signalverläufe aufgetragen über einen Kurbelwellenwinkel,
- Figuren 4 und 5: ein Ablaufdiagramm einer ersten Ausführungsform eines Programms zum Steuern einer Brennkraftmaschine und
- Figur 6: ein Ablaufdiagramm einer weiteren Ausführungsform eines Programms zum Steuern der Brennkraftmaschine.

Elemente gleicher Konstruktion oder Funktion sind figurenübergreifend mit den gleichen Bezugszeichen gekennzeichnet.

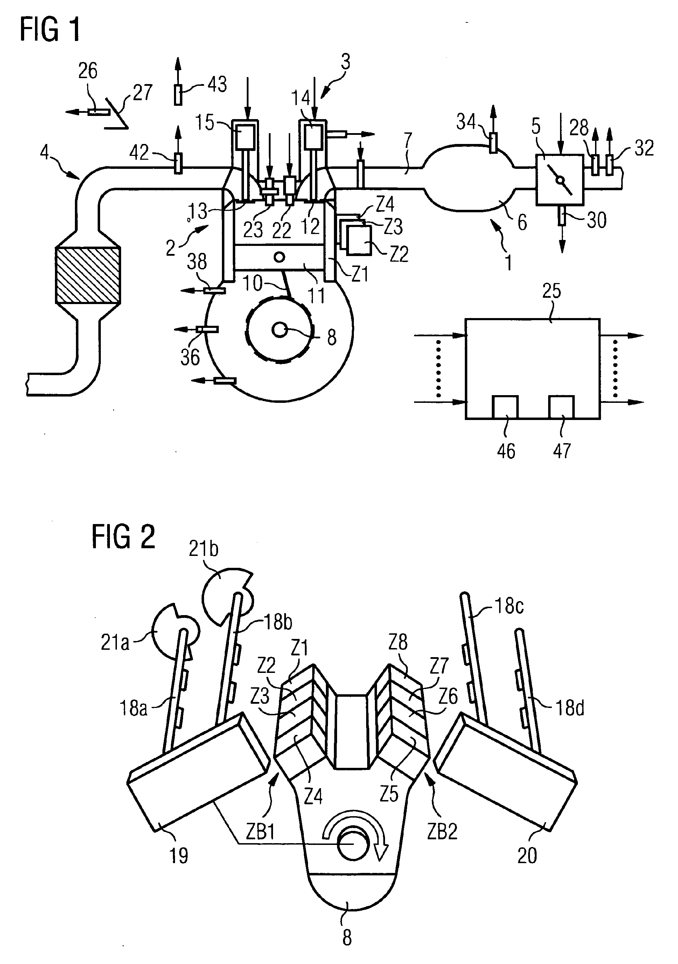

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise mindestens eine Drosselklappe 5, ferner mindestens einen Sammler 6 und ein Saugrohr 7, das hin zu einem Zylinder Z1 über einen Einlasskanal in den Motorblock 2 geführt ist. Der Motorblock 2 umfasst ferner eine Kurbelwelle, welche über eine Pleuelstange 10 mit dem Kolben des Zylinders Z1 gekoppelt ist.

Der Zylinderkopf 3 umfasst einen Ventiltrieb mit einem Gaseinlassventil 12, ein Gasauslassventil 13 und Ventilantriebe 14, 15.

Die Brennkraftmaschine umfasst mehrere Zylinder Z1 bis Z8. Die Zylinder Z1 bis Z4 sind einer ersten Zylinderbank ZB1 zugeordnet, während die Zylinder Z5 bis Z8 einer zweiten Zylinderbank ZB2 zugeordnet sind (Fig. 2). Den Gaseinlassventilen 12, die den Zylindern Z1 bis Z4 der ersten Zylinderbank zugeordnet sind, ist eine Nockenwelle 18a zugeordnet. Den Gasauslassventilen 13, die den Zylindern der ersten Zylinderbank ZB1 zugeordnet sind, ist eine Nockenwelle 18b zugeordnet. Die Nockenwellen 18a und 18b sind mechanisch gekoppelt mit der Kurbelwelle 8 wobei mechanisch zwischengeschaltet eine Verstelleinrichtung 19 angeordnet ist, mittels der eine Ventilüberschneidung VO zwischen den Nockenwellen 18a und 18b eingestellt werden kann. Dazu werden Phasenlagen der Nockenwellen 18a und 18b entweder beide oder lediglich eine im Vergleich zu der Kurbelwelle 8 mittels der Verstelleinrichtung 19 verstellt.

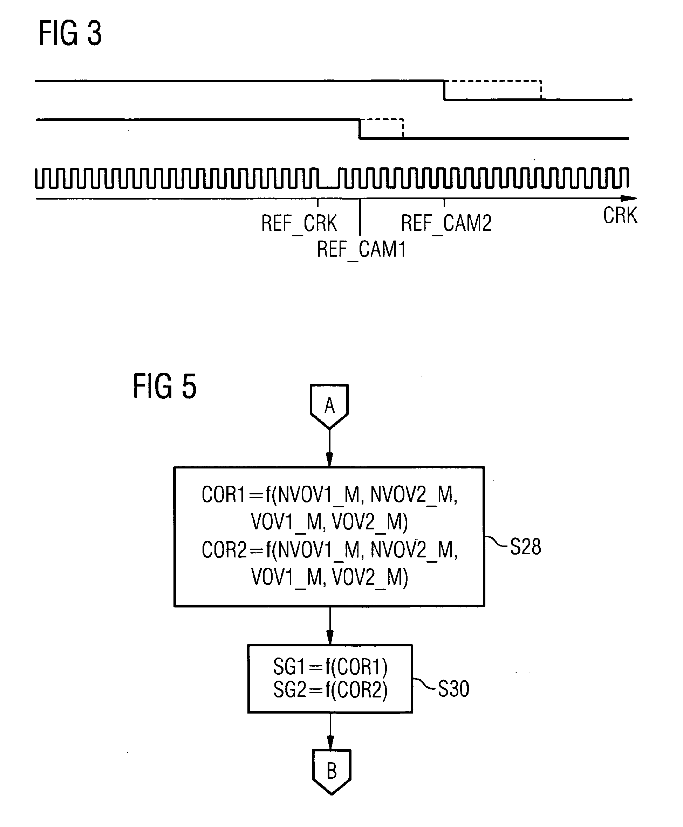

Zur Verdeutlichung des Begriffs der Phasenlage ist in Figur 3 ein Verlauf eines mittels eines Kurbelwellenwinkelsensors 36 erfassten Signals über den Kurbelwellenwinkel CRK aufgetragen und im Vergleich dazu Signale, die von entsprechenden Nockenwellenwinkelsensoren erfasst werden. Die Phasenlage ist definiert, durch einen Winkel, so zum Beispiel der Kurbelwellenwinkel zwischen zwei Bezugsmarken je eine auf der Kurbelwelle und die andere auf der jeweiligen Nockenwelle 18a, 18b und zwar bezogen auf eine absolute Position der Nockenwelle oder der Kurbelwelle. In Figur 3 ist dies anhand der Referenzmarke REF_CRK und der Referenzmarke REF_CAM1 auf der Nockenwelle 18a beziehungsweise der Referenzmarke REF_CAM2 auf der Nockenwelle 18b exemplarisch dargestellt. Die Referenzmarke REF_CRK auf der Kurbelwelle 8 ist gegeben durch eine fallende Zahnflanke hin zu einer Lücke eines Kurbelwellenwinkelgeberzahnrades. Die Referenzmarke REF_CAM1 und die Referenzmarke REF_CAM2 der Kurbelwelle 18a und 18b sind jeweils gegeben durch entsprechende Zahnflanken von Nockenwellengebern 21a, 21b. Eine Verstellung der jeweiligen Phasenlage ist in Figur 3 anhand der gestrichelten Linien dargestellt.

Den Gaseinlassventilen 12 der Zylinder Z5 bis Z8 der zweiten Zylinderbank ZB2 ist eine Nockenwelle 18c zugeordnet. Den Gasauslassventilen 13 der Zylinder Z5 bis Z8 der zweiten Zylinderbank ZB2 ist eine Nockenwelle 18d zugeordnet. Auch die Nockenwellen 18c und 18d sind entsprechend den Nockenwellen 18a und 18b mechanisch gekoppelt mit der Kurbelwelle und eine Ventilüberschneidung VO der Gaseinlassventile und der Gasauslassventile 12, 13 der Zylinder Z5 bis Z8 der zweiten Zylinderbank ZB2 ist auch hier mittels einer Verstelleinrichtung 20 einstellbar.

Es müssen nicht notwendigerweise jeweils beide einer Zylinderbank ZB1, ZB2 zugeordneten Nockenwelle 18a bis 18d in ihrer Phasenlage verstellbar sein. Die Ventilüberschneidung VO kann auch eingestellt werden mittels lediglich jeweils einer verstellbaren Nockenwelle 18a bis 18d.

Der Zylinderkopf 3 umfasst ferner ein Einspritzventil 22 und eine Zündkerze 23. Alternativ kann das Einspritzventil 22 auch in dem Saugrohr 7 angeordnet sein.

Eine Steuervorrichtung 25 ist vorgesehen, der Sensoren zugeordnet sind, die verschiedene Messgrößen erfassen und jeweils den Wert der Messgröße ermitteln. Die Steuervorrichtung 25 ermittelt abhängig von mindestens einer Messgröße Stellgrößen, die dann in ein oder mehrere Stellsignale zum Steuern der Stellglieder mittels entsprechender Stellantriebe umgesetzt werden. Die Steuervorrichtung 25 kann auch als Vorrichtung zum Steuern der Brennkraftmaschine bezeichnet werden.

Die Sensoren sind ein Pedalstellungsgeber 26 welcher eine Fahrpedalstellung eines Fahrpedals 27 erfasst, eine Luftmassensensor 28, welcher einen Luftmassenstrom stromaufwärts der Drosselklappe 5 erfasst, mindestens ein bevorzugt jedoch zwei Drosselklappenstellungssensoren 30, welche einen Öffnungsgrad der jeweiligen Drosselklappe 5 erfassen, ein erster Temperatursensor 32, welcher eine Ansauglufttemperatur erfasst, mindestens ein Saugrohrdrucksensor 34, welcher einen Saugrohrdruck in dem Sammler 6 erfasst, ein Kurbelwellenwinkelsensor 36, welcher den Kurbelwellenwinkel CRK erfasst, dem dann auch eine Drehzahl N zugeordnet wird. Ein zweiter Temperatursensor 38 erfasst eine Kühlmitteltemperatur. Ferner ist mindestens ein Nockenwellenwinkelsensor 39 vorgesehen, welcher einen Nockenwellenwinkel erfasst. Es können jedoch auch mehrere Nockenwellenwinkelsensoren vorhanden sein, also gegebenenfalls kann auch jeder Nockenwelle ein Nockenwellenwinkelsensor zugeordnet sein. Ferner ist jeder Zylinderbank ZB1, ZB2 jeweils eine Abgassonde 42, 43 zugeordnet, welche einen Restsauerstoffgehalt des Abgases erfassen und deren Messsignale charakteristisch sind für das Luft/Kraftstoff-Verhältnis in den Zylindern Z1 bis Z4 der ersten Zylinderbank ZB1 beziehungsweise in den Zylindern Z5 bis Z8 der zweiten Zylinderbank ZB2.

Je nach Ausführungsform der Erfindung kann eine beliebige Untermenge der genannten Sensoren vorhanden sein oder es können auch zusätzliche Sensoren vorhanden sein.

Stellglieder sind beispielsweise die Drosselklappe, die Gaseinlass- und die Gasauslassventile, ein Impulsladeventil, eine Ventilhub-Verstelleinrichtung, das Einspritzventil 22 oder die Zündkerze 23. Auch den Zylindern Z2 bis Z8 sind entsprechende Stellglieder zugeordnet. Die Beschreibung des Zylinders Z1 ist lediglich exemplarisch für alle Zylinder Z1 bis Z8.

Der Steuervorrichtung ist für jede Zylinderbank ZB1, ZB2 ein separater Lambda-Regler 46, 47 zugeordnet. Der Lambdaregler 46,47 ermittelt abhängig von dem Messsignal der jeweiligen Abgassonde 42, 43 und einem Sollwert des Luft/Kraftstoff-Verhältnisses eine jeweilige Reglerstellgröße LAM_FAC1, LAM_FAC2, mittels der dann beispielsweise die über die jeweiligen Einspritzventile 22 den Zylindern entweder der ersten Zylinderbank ZB1 oder der zweiten Zylinderbank ZB2 zuzumessende Kraftstoffmasse verändert wird im Sinne eines Einstellens des gewünschten Sollwertes des Luft/Kraftstoff-Verhältnisses. Der Lambda-Regler 46, 47 kann beispielsweise als PI oder auch als PII²D-Regler oder als ein sonstiger geeigneter und dem Fachmann bekannter Lambda-Regler 46, 47 ausgebildet sein.

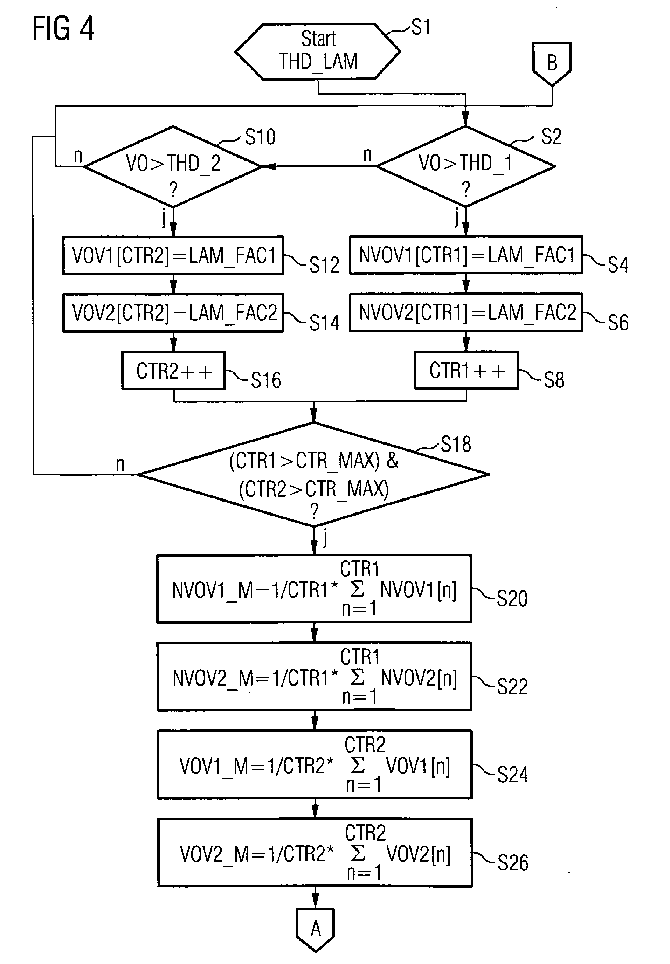

Ein Programm zum Steuern der Brennkraftmaschine in einer ersten Ausführungsform (siehe Figuren 4 und 5) ist in der Steuervorrichtung 25 gespeichert und kann während des Betriebs der Brennkraftmaschine abgearbeitet werden. Das Programm wird in einem Schritt S1 gestartet.

Bevorzugt wird das Programm in dem Schritt S1 gestartet, wenn eine Abweichung zwischen den Reglerstellgrößen LAM_FAC1, LAM_FAC2 größer ist als ein geeignet gewählter Lambda-Schwellenwert THD_LAM. In einem Schritt S2 wird dann geprüft, ob die aktuelle Ventilüberschneidung VO größer ist als ein vorgegebener erster Schwellenwert THD1. Die Ventilüberschneidung VO wird bevorzugt für die Zylinder Z1-Z8 beider Zylinderbänke ZB1, ZB2 gleich vorgegeben.

Ist die Bedingung des Schrittes S2 erfüllt, so wird in einem Schritt S4 einem ersten Nicht-Ventilüberschneidungswert NVOV1 die Reglerstellgröße LAM_FAC1 zugeordnet. Dem ersten Nicht-Ventilüberschneidungswert NVOV1, der der ersten Zylinderbank ZB1 zugeordnet ist, ist bevorzugt in der Steuervorrichtung 25 ein Feld zugeordnet, so dass mehrere derartige erste Nicht-Ventilüberschneidungswerte NVOV1 zwischengespeichert werden können. Der in eckigen Klammern angegebene erste Zähler CTR1 bezeichnet die jeweilige Position innerhalb des Vektors.

In einem anschließenden Schritt S6 erfolgt eine Zuordnung der Reglerstellgröße LAM_FAC2 zu einem zweiten Nicht-Ventilüberschneidungswert NVOV2, der der zweiten Zylinderbank ZB2 zugeordnet ist. Auch hier ist wieder ein entsprechender Vektor vorgesehen um mehrere zweite Nicht-Ventilüberschneidungswerte NVOV2, die der zweiten Zylinderbank ZB2 zugeordnet sind, zwischenspeichern zu können.

In einem Schritt S8 wird der erste Zähler CTR1 inkrementiert.

Ist die Bedingung des Schrittes S2 hingegen nicht erfüllt, so wird in einem Schritt S10 geprüft, ob die Ventilüberschneidung VO größer ist als ein zweiter Schwellenwert THD2. Die ersten und zweiten Schwellenwerte THD1, THD2 sind geeignet vorgegeben und beispielsweise durch entsprechende Versuche vorab ermittelt. Der erste Schwellenwert THD1 ist so gewählt, dass, solange er unterschritten wird, die Ventilüberschneidung VO derart gering ist, dass sie keinen oder nur einen vernachlässigbaren Einfluss auf die Reglerstellgrößen hat, wenn sie abweicht von der gewünschten einzustellenden Ventilüberschneidung VO. Der zweite Schwellenwert THD2 ist hingegen so gewählt, dass bei seinem Überschreiten durch die Ventilüberschneidung VO die Ventilüberschneidung VO derart groß ist, dass sie einen Einfluss auf die Reglerstellgröße LAM_FAC1, LAM_FAC2 hat.

Ist die Bedingung des Schrittes S10 nicht erfüllt, so wird die Bearbeitung, gegebenenfalls nach einer vorgegebenen Wartezeitdauer oder einem vorgegebenen Kurbelwellenwinkel erneut in dem Schritt S2 fortgesetzt. Ist die Bedingung des Schrittes S10 hingegen erfüllt, so wird in einem Schritt S12 einem ersten Ventilüberschneidungswert VOV1 der Wert der Reglerstellgröße LAM_FAC1 zugeordnet. Der erste Ventilüberschneidungswert VOV1 ist somit den Zylindern Z1 bis Z4 der ersten Zylinderbank ZB1 zugeordnet. Auch hier ist zum Zwischenspeichern mehrerer derartiger Werte ein Vektor in der Recheneinheit der Steuervorrichtung 25 oder in einem Speicher dieser vorgesehen und ein Zähler CTR2 bezeichnet die Speicherstelle innerhalb des Vektors.

In einem Schritt S14 wird ein zweiter Ventilüberschneidungswert VOV2 mit dem aktuellen Wert der Reglerstellgröße LAM_FAC2 belegt. Der zweite Ventilüberschneidungswert VOV2 ist somit der zweiten Zylinderbank ZB2 zugeordnet. Auch hier ist wieder ein entsprechender Vektor zum Zwischenspeichern mehrerer Werte vorgesehen.

In einem anschließenden Schritt S14 wird dann ein Zähler CTR2 inkrementiert.

In einem Schritt S18 wird anschließend geprüft, ob sowohl der erste Zähler CTR1 als auch der zweite Zähler CTR2 einen Maximalwert CTR_MAX, der geeignet vorgegeben ist, überschreiten. Ist dies nicht der Fall, so wird die Bearbeitung, gegebenenfalls nach der vorgegebenen Wartezeitdauer oder nach dem vorgegebenen Kurbelwellenwinkel, erneut in dem Schritt S2 fortgesetzt.

Ist die Bedingung des Schrittes S18 hingegen erfüllt, so wird in einem Schritt S20 ein gemittelter erster Nicht-Ventilüberschneidungswert NVOV1_M gemäß der in dem Schritt S20 angegebenen Beziehung ermittelt. Entsprechend werden in den nachfolgenden Schritten S22 bis S26 gemittelte zweite Nicht-Ventilüberschneidungswerte NVOV2_M und erste und zweite gemittelte Ventilüberschneidungswerte VOV1_M, VOV2_M ermittelt.

Anschließend wird die Bearbeitung in einem auf den Verknüpfungspunkt A folgenden Schritt fortgesetzt. Dies ist der Schritt S28, in dem ein erster Korrekturwert COR1 und ein zweiter Korrekturwert COR2 abhängig von den gemittelten ersten und zweiten Nicht-Ventilüberschneidungswerten NVOV1_M, NVOV2_M und den gemittelten ersten und zweiten Ventilüberschneidungswerten VOV1_M, VOV2_M ermittelt wird. Dies kann beispielsweise mittels einer vorgegebenen analytischen Funktion aber auch bevorzugt über ein geeignet bedatetes Kennfeld erfolgen. Ein derartiges Kennfeld wird beispielsweise durch Versuche an einem Motorprüfstand oder Simulationen vorab ermittelt und in der Steuervorrichtung 25 gespeichert.

In einem Schritt S30 werden dann Stellsignale SG1, SG2 zum Steuern der Verstelleinrichtungen 19, 20 abhängig von den ersten beziehungsweise zweiten Korrekturwerten COR1, COR2 korrigiert und zwar im Sinne eines Angleichens der Luftmassen in den jeweiligen Zylindern bei einer eingestellten Ventilüberschneidung VO. Alternativ kann auch nur einer der Korrekturwerte COR1, COR2 ermittelt werden und somit nur das entsprechende Stellsignal SG1 beziehungsweise SG2 korrigiert werden und zwar ebenfalls im Sinne eines Angleichens der Luftmassen in den jeweiligen Zylindern der ersten und zweiten Zylinderbänke.

Das Programm wird anschließend entweder beendet oder gegebenenfalls alternativ auch erneut in dem Schritt S2 fortgesetzt. Bevorzugt werden der erste oder der zweite Korrekturwert COR1, COR2 adaptiv angepasst.

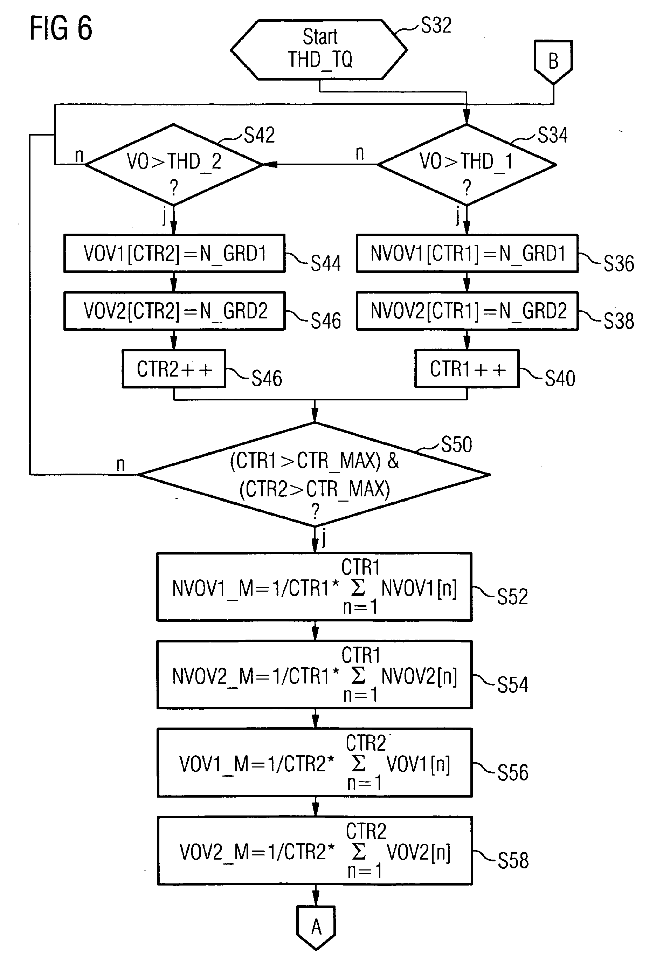

Eine zweite Ausführungsform des Programms ist anhand des Ablaufdiagramms der Figur 6 näher erläutert. Das Programm wird in einem Schritt S32 gestartet.

Bevorzugt wird das Programm in dem Schritt S32 gestartet, wenn die Werte, einer für das durch die erste Zylinderbank ZB1 und andererseits durch die zweite Zylinderbank ZB2 erzeugte Drehmoment repräsentativen Größe, einen vorgegebenen Drehmoment-Schwellenwert THD_TQ voneinander abweichen. Eine derartige Größe kann beispielsweise ein Drehzahlgradient oder auch ein erfasstes Drehmoment sein.

Schritte S34 bis S58 entsprechen dann sinngemäß den Schritten S2 bis S26. N_GRD1 sind Drehzahlgradienten, die den Zylindern Z1-Z4 der ersten Zylinderbank ZB1 zugeordnet sind. N_GRD2 sind Drehzahlgradienten, die den Zylindern Z5-Z8 der zweiten Zylinderbank ZB2 zugeordnet sind.

## Patentansprüche

1. Verfahren zum Steuern einer Brennkraftmaschine mit einer ersten und zweiten Zylinderbank (ZB1, ZB2), die jeweils aufweisen eine Nockenwelle (18a, 18c) für die Gaseinlassventile (12) und eine für die Gasauslassventile (13), der der jeweiligen Zylinderbank (ZB1,ZB2) zugeordneten Zylinder (Z1-Z8), die ferner jeweils aufweisen eine Verstelleinrichtung (19,20) zum Einstellen einer Ventilüberschneidung (VO) zwischen den Gaseinlassventilen (12) und den Gasauslassventilen (13), wobei jeder Zylinderbank (ZB1, ZB2) ein Lambdaregler (46,47) zugeordnet ist, dessen Reglerstellgröße auf mindestens ein Stellglied einwirkt, das der jeweiligen Zylinderbank-(ZB1, ZB2) zugeordnet ist, bei dem
- in mindestens einer Betriebssituation, in der die Ventilüberschneidung (VO) derart gering ist, dass sie keinen Einfluss auf die Reglerstellgrößen hat, Werte der Reglerstellgrößen als Nicht-Ventilüberschneidungswerte (NVOV1,NVOV2) der ersten und der zweiten Zylinderbank (ZB1,ZB2) erfasst werden,
- in mindestens einer weiteren Betriebssituation, in der die Ventilüberschneidung (VO) derart groß ist, dass sie einen Einfluss auf die Reglerstellgrößen hat, Werte der Reglerstellgrößen als Ventilüberschneidungswerte (VOV1, VOV2) der ersten und der zweiten Zylinderbank (ZB1, ZB2) erfasst werden, und
- abhängig von den Ventilüberschneidungswerten (VOV1, VOV2) und Nicht-Ventilüberschneidungswerten (NVOV1, NVOV2) der ersten und der zweiten Zylinderbank (ZB1, ZB2) ein Korrekturwert (COR1) für die Verstelleinrichtung (19) ermittelt wird, die der ersten Zylinderbank (ZB1) zugeordnet ist, und/oder ein Korrekturwert (COR2) für die Verstelleinrichtung (20) ermittelt wird, die der zweiten Zylinderbank (ZB2) zugeordnet ist, und
- die Verstelleinrichtung (19,20) der ersten und/oder der zweiten Zylinderbank (ZB1, ZB2) abhängig von den ihnen zugeordneten Korrekturwerten (COR1,COR2) angesteuert werden.

2. Verfahren nach Anspruch 1, bei dem das Erfassen der Ventilüberschneidungswerte (VOV1, VOV2) und Nicht-Ventilüberschneidungswerte (NVOV1, NVOV2) gestartet wird, wenn die Reglerstellgrößen der ersten und zweiten Zylinderbank (ZB1, ZB2) um einen vorgegebenen Lambda-Schwellenwert (THD_LAM) voneinander abweichen.

3. Verfahren zum Steuern einer Brennkraftmaschine mit einer ersten und zweiten Zylinderbank (ZB1, ZB2), die jeweils aufweisen eine Nockenwelle (18a, 18c) für die Gaseinlassventile (12) und eine für die Gasauslassventile (13), der der jeweiligen Zylinderbank (ZB1,ZB2) zugeordneten Zylinder (Z1-Z8), die ferner jeweils aufweisen eine Verstelleinrichtung (19,20) zum Einstellen einer Ventilüberschneidung (VO) zwischen den Gaseinlassventilen (12) und den Gasauslassventilen (13), wobei jeder Zylinderbank (ZB1, ZB2) ein Lambdaregler (46,47) zugeordnet ist, dessen Reglerstellgröße auf mindestens ein Stellglied einwirkt, das der jeweiligen Zylinderbank (ZB1, ZB2) zugeordnet ist, bei dem
- in mindestens einer Betriebssituation, in der die Ventilüberschneidung (VO) derart gering ist, dass sie keinen Einfluss auf ein Drehmoment hat, das durch die Verbrennung eines Luft-Kraftstoff-Gemisches in den Zylindern (Z1-Z8) auf die Kurbelwelle (8) übertragen wird, Werte einer für das durch die erste Zylinderbank (ZB1) und andererseits durch die zweite Zylinderbank (ZB2) erzeugte Drehmoment repräsentativen Größe erfasst werden als Nicht-Ventilüberschneidungswerte (NVOV1,NVOV2) der ersten und der zweiten Zylinderbank (ZB1,ZB2),
- in mindestens einer weiteren Betriebssituation, in der die Ventilüberschneidung (VO) derart groß ist, dass sie einen Einfluss auf das Drehmoment hat, das durch die Verbrennung des Luft/Kraftstoff-Gemisches in den Zylindern (Z1-Z8) auf die Kurbelwelle (8) übertragen wird, Werte der für das durch die erste Zylinderbank (ZB1) und andererseits durch die zweite Zylinderbank (ZB2) erzeugte Drehmoment repräsentativen Größe erfasst werden als Ventilüberschneidungswerte (VOV1, VOV2) der ersten und der zweiten Zylinderbank (ZB1, ZB2), und
- abhängig von den Ventilüberschneidungswerten (VOV1, VOV2) und Nicht-Ventilüberschneidungswerten (NVOV1, NVOV2) der ersten und der zweiten Zylinderbank (ZB1, ZB2) ein Korrekturwert (COR1) für die Verstelleinrichtung (19) ermittelt wird, die der ersten Zylinderbank (ZB1) zugeordnet ist, und/oder ein Korrekturwert (COR2) für die Verstelleinrichtung (20) ermittelt wird, die der zweiten Zylinderbank (ZB2) zugeordnet ist, und
- die Verstelleinrichtung (19,20) der ersten und/oder der zweiten Zylinderbank (ZB1, ZB2) abhängig von den ihnen zugeordneten Korrekturwerten (COR1,COR2) angesteuert werden.

4. Verfahren nach Anspruch 3, bei dem das Erfassen der Ventilüberschneidungswerte (VOV1, VOV2) und Nicht-Ventilüberschneidungswerte (NVOV1, NVOV2) gestartet wird, wenn die Werte, der für das durch die erste Zylinderbank (ZB1) und andererseits durch die zweite Zylinderbank (ZB2) erzeugte Drehmoment repräsentativen Größe, einen vorgegebenen Drehmoment-Schwellenwert (THD_TQ) voneinander abweichen.

5. Verfahren nach einem der Ansprüche 3 oder 4, bei dem die Größe, die repräsentativ ist für das durch die erste Zylinderbank (ZB1) und andererseits durch die zweite Zylinderbank (ZB2) erzeugte Drehmoment, ein Drehzahlgradient (N_GRD1, N_GRD2) ist.

6. Verfahren nach einem der vorstehenden Ansprüche, bei dem Korrekturwerte (COR1, COR2) abhängig von gemittelten Ventilüberschneidungswerten (VOV1_M, VOV2_M) und Nicht-Ventilüberschneidungswerten (NVOV1_M, NVOV2_M) berechnet werden, die über eine vorgegebene Anzahl oder während einer vorgegebenen Zeitdauer erfassten Ventilüberschneidungswerte (VOV1, VOV2) und Nicht-Ventilüberschneidungswerte (NVOV1, NVOV2) gemittelt sind.

7. Verfahren nach einem der vorstehenden Ansprüche, bei dem das Korrigieren der Ansteuerung der Verstelleinrichtung (19,20) oder der Verstelleinrichtungen (19,20) adaptiv erfolgt.

8. Vorrichtung zum Steuern einer Brennkraftmaschine mit einer ersten und zweiten Zylinderbank (ZB1, ZB2), die jeweils aufweisen eine Nockenwelle (18a, 18c) für die Gaseinlassventile (12) und eine für die Gasauslassventile (13), der der jeweiligen Zylinderbank (ZB1, ZB2) zugeordneten Zylinder (Z1-Z8), die ferner jeweils aufweisen eine Verstelleinrichtung (19,20) zum Einstellen einer Ventilüberschneidung (VO) zwischen den Gaseinlassventilen (12) und den Gasauslassventilen (13), wobei jeder Zylinderbank (ZB1, ZB2) ein Lambdaregler (46,47) zugeordnet ist, dessen Reglerstellgröße auf mindestens ein Stellglied einwirkt, das der jeweiligen Zylinderbank (ZB1, ZB2) zugeordnet ist, wobei die Vorrichtung ausgebildet ist zum
- Erfassen von Werten der Reglerstellgrößen als Nicht-Ventilüberschneidungswerte (NVOV1,NVOV2) der ersten und der zweiten Zylinderbank (ZB1,ZB2), in mindestens einer Betriebssituation, in der die Ventilüberschneidung (VO) derart gering ist, dass sie keinen Einfluss auf die Reglerstellgrößen hat,
- Erfassen von Werten der Reglerstellgrößen als Ventilüberschneidungswerte (VOV1, VOV2) der ersten und der zweiten Zylinderbank (ZB1, ZB2), in mindestens einer weiteren Betriebssituation, in der die Ventilüberschneidung (VO) derart groß ist, dass sie einen Einfluss auf die Reglerstellgrößen hat, und
- Ermitteln abhängig von den Ventilüberschneidungswerten (VOV1, VOV2) und Nicht-Ventilüberschneidungswerten (NVOV1, NVOV2) der ersten und der zweiten Zylinderbank (ZB1, ZB2) eines Korrekturwertes (COR1) für die Verstelleinrichtung (19), die der ersten Zylinderbank (ZB1) zugeordnet ist, und/oder eines Korrekturwertes (COR2) für die Verstelleinrichtung (20), die der zweiten Zylinderbank (ZB2) zugeordnet ist, und
- Ansteuern der Verstelleinrichtung (19,20) der ersten und/oder der zweiten Zylinderbank (ZB1, ZB2) abhängig von den ihnen zugeordneten Korrekturwerten (COR1,COR2).

9. Vorrichtung zum Steuern einer Brennkraftmaschine mit einer ersten und zweiten Zylinderbank (ZB1, ZB2), die jeweils aufweisen eine Nockenwelle (18a, 18c) für die Gaseinlassventile (12) und eine für die Gasauslassventile (13), der der jeweiligen Zylinderbank (ZB1,ZB2) zugeordneten Zylinder (Z1-Z8), die ferner jeweils aufweisen eine Verstelleinrichtung (19,20) zum Einstellen einer Ventilüberschneidung (VO) zwischen den Gaseinlassventilen (12) und den Gasauslassventilen (13), wobei jeder Zylinderbank (ZB1, ZB2) ein Lambdaregler (46,47) zugeordnet ist, dessen Reglerstellgröße auf mindestens ein Stellglied einwirkt, das der jeweiligen Zylinderbank (ZB1, ZB2) zugeordnet ist, wobei die Vorrichtung ausgebildet ist zum
- Erfassen in mindestens einer Betriebssituation, in der die Ventilüberschneidung (VO) derart gering ist, dass sie keinen Einfluss auf ein Drehmoment hat, das durch die Verbrennung eines Luft-Kraftstoff-Gemisches in den Zylindern (Z1-Z8) auf die Kurbelwelle (8) übertragen wird, von Werten einer für das durch die erste Zylinderbank (ZB1) und andererseits durch die zweite Zylinderbank (ZB2) erzeugte Drehmoment repräsentativen Größe als Nicht-Ventilüberschneidungswerte (NVOV1,NVOV2) der ersten und der zweiten Zylinderbank (ZB1,ZB2),
- Erfassen in mindestens einer weiteren Betriebssituation, in der die Ventilüberschneidung (VO) derart groß ist, dass sie einen Einfluss auf das Drehmoment hat, das durch die Verbrennung des Luft/Kraftstoff-Gemisches in den Zylindern (Z1-Z8) auf die Kurbelwelle (8) übertragen wird, von Werten der für das durch die erste Zylinderbank (ZB1) und andererseits durch die zweite Zylinderbank (ZB2) erzeugte Drehmoment repräsentativen Größe als Ventilüberschneidungswerte (VOV1, VOV2) der ersten und der zweiten Zylinderbank (ZB1, ZB2), und
- Ermitteln abhängig von den Ventilüberschneidungswerten (VOV1, VOV2) und Nicht-Ventilüberschneidungswerten (NVOV1, NVOV2) der ersten und der zweiten Zylinderbank (ZB1, ZB2) eines Korrekturwertes (COR1) für die Verstelleinrichtung (19), die der ersten Zylinderbank (ZB1) zugeordnet ist, und/oder eines Korrekturwertes (COR2) für die Verstelleinrichtung (20), die der zweiten Zylinderbank (ZB2) zugeordnet ist, und
- Ansteuern der Verstelleinrichtung (19,20) der ersten und/oder der zweiten Zylinderbank (ZB1, ZB2) abhängig von den ihnen zugeordneten Korrekturwerten (COR1,COR2).

## Claims

1. Method for controlling an internal combustion engine with a first and second cylinder line (ZB1, ZB2), each having one camshaft (18a, 18c) for the gas intake valves (12) and one for the gas discharge valves (13) of the cylinders (Z1-Z8) assigned to the respective cylinder line (ZB1, ZB2), which also have an adjustment facility (19, 20) to set a valve overlap (VO) between the gas intake valves (12) and gas discharge valves (13), with a lambda controller (46, 47) assigned to each cylinder line (ZB1, ZB2), the manipulated controller variable of which acts on at least one actuator, which is assigned to the respective cylinder line (ZB1, ZB2), wherein
- in at least one operating situation, in which the valve overlap (VO) is so small that it has no influence on the manipulated controller variables, values of the manipulated controller variables are detected as non-valve-overlap values (NVOV1, NVOV2) of the first and second cylinder lines (ZB1, ZB2),
- in at least one further operating situation, in which the valve overlap (VO) is so great that it has an influence on the manipulated controller variables, values of the manipulated controller variables are detected as valve-overlap values (VOV1, VOV2) of the first and second cylinder lines (ZB1, ZB2) and
- a correction value (COR1) for the adjustment facility (19) assigned to the first cylinder line (ZB1) and/or a correction value (COR2) for the adjustment facility (20) assigned to the second cylinder line (ZB2) is/are determined as a function of the valve-overlap values (VOV1, VOV2) and non-valve-overlap values (NVOV1, NVOV2) of the first and second cylinder lines (ZB1, ZB2), and
- the adjustment facility (19, 20) of the first and/or second cylinder line (ZB1, ZB2) is activated as a function of the correction values (COR1, COR2) assigned to them.

2. Method according to claim 1, wherein detection of the valve-overlap values (VOV1, VOV2) and non-valve-overlap values (NVOV1, NVOV2) is started, when the manipulated controller variables of the first and second cylinder lines (ZB1, ZB2) differ from each other by a predetermined lambda threshold value (THD_LAM).

3. Method for controlling an internal combustion engine with a first and second cylinder line (ZB1, ZB2), each having one camshaft (18a, 18c) for the gas intake valves (12) and one for the gas discharge valves (13) of the cylinders (Z1-Z8) assigned to the respective cylinder line (ZB1, ZB2), which also have an adjustment facility (19, 20) to set a valve overlap (VO) between the gas intake valves (12) and gas discharge valves (13), with a lambda controller (46, 47) assigned to each cylinder line (ZB1, ZB2), the manipulated controller variable of which acts on at least one actuator, which is assigned to the respective cylinder line (ZB1, ZB2), wherein
- in at least one operating situation, in which the valve overlap (VO) is so small that it has no influence on a torque, which is transmitted by the combustion of an air/fuel mixture in the cylinders (Z1-Z8) to the crankshaft (8), values of a variable, which is representative of the torque generated by the first cylinder line (ZB1) and on the other hand by the second cylinder line (ZB2), are detected as non-valve-overlap values (NVOV1, NVOV2) of the first and second cylinder lines (ZB1, ZB2),
- in at least one further operating situation, in which the valve overlap (VO) is so great that it has an influence on the torque, which is transmitted by the combustion of the air/fuel mixture in the cylinders (Z1-Z8) to the crankshaft (8), values of the variable, which is representative of the torque generated by the first cylinder line (ZB1) and on the other hand by the second cylinder line (ZB2), are detected as valve-overlap values (VOV1, VOV2) of the first and second cylinder lines (ZB1, ZB2) and
- a correction value (COR1) for the adjustment facility (19) assigned to the first cylinder line (ZB1) and/or a correction value (COR2) for the adjustment facility (20) assigned to the second cylinder line (ZB2) is/are determined as a function of the valve-overlap values (VOV1, VOV2) and non-valve-overlap values (NVOV1, NVOV2) of the first and second cylinder lines (ZB1, ZB2), and
- the adjustment facility (19, 20) of the first and/or second cylinder line (ZB1, ZB2) is activated as a function of the correction values (COR1, COR2) assigned to them.

4. Method according to claim 3, wherein detection of the valve-overlap values (VOV1, VOV2) and non-valve-overlap values (NVOV1, NVOV2) is started, when the values of the variable, which is representative of the torque generated by the first cylinder line (ZB1) and on the other hand by the second cylinder line (ZB2), differ from each other by a predetermined torque threshold value (THD_TQ).

5. Method according to one of claims 3 or 4, wherein the variable, which is representative of the torque generated by the first cylinder line (ZB1) and on the other hand by the second cylinder line (ZB2) is a rotational engine speed gradient (N_GRD1, N_GRD2).

6. Method according to one of the preceding claims, wherein correction values (COR1, COR2) are calculated as a function of mean valve-overlap values (VOV1_M, VOV2_M) and non-valve-overlap values (NVOV1_M, NVOV2_M), which are averaged over a predetermined number of valve-overlap values (VOV1, VOV2) and non-valve-overlap values (NVOV1, NVOV2) or are valve-overlap (VOV1, VOV2) values and non-valve-overlap values (NVOV1, NVOV2) detected during a predetermined time period.

7. Method according to one of the preceding claims, wherein correction of the activation of the adjustment facility (19, 20) or the adjustment facilities (19, 20) takes place in an adaptive manner.

8. Device for controlling an internal combustion engine with a first and second cylinder line (ZB1, ZB2), each having one camshaft (18a, 18c) for the gas intake valves (12) and one for the gas discharge valves (13) of the cylinders (Z1-Z8) assigned to the respective cylinder line (ZB1, ZB2), which also have an adjustment facility (19, 20) to set a valve overlap (VO) between the gas intake valves (12) and gas discharge valves (13), with a lambda controller (46, 47) assigned to each cylinder line (ZB1, ZB2), the manipulated controller variable of which acts on at least one actuator, which is assigned to the respective cylinder line (ZB1, ZB2), the device being configured
- to detect values of the manipulated controller variables as non-valve-overlap values (NVOV1, NVOV2) of the first and second cylinder lines (ZB1, ZB2), in at least one operating situation, in which the valve overlap (VO) is so small that it has no influence on the manipulated controller variables,
- to detect values of the manipulated controller variables as valve-overlap values (VOV1, VOV2) of the first and second cylinder lines (ZB1, ZB2), in at least one further operating situation, in which the valve overlap (VO) is so great that it has an influence on the manipulated controller variables, and
- to determine a correction value (COR1) for the adjustment facility (19) assigned to the first cylinder line (ZB1) and/or a correction value (COR2) for the adjustment facility (20) assigned to the second cylinder line (ZB2) as a function of the valve-overlap values (VOV1, VOV2) and non-valve-overlap values (NVOV1, NVOV2) of the first and second cylinder lines (ZB1, ZB2), and
- to activate the adjustment facility (19, 20) of the first and/or second cylinder line (ZB1, ZB2) as a function of the correction values (COR1, COR2) assigned to them.

9. Device for controlling an internal combustion engine with a first and second cylinder line (ZB1, ZB2), each having one camshaft (18a, 18c) for the gas intake valves (12) and one for the gas discharge valves (13) of the cylinders (Z1-Z8) assigned to the respective cylinder line (ZB1, ZB2), which also have an adjustment facility (19, 20) to set a valve overlap (VO) between the gas intake valves (12) and gas discharge valves (13), with a lambda controller (46, 47) assigned to each cylinder line (ZB1, ZB2), the manipulated controller variable of which acts on at least one actuator, which is assigned to the respective cylinder line (ZB1, ZB2), with the device being configured
- to detect values of a variable, which is representative of the torque generated by the first cylinder line (ZB1) and on the other hand by the second cylinder line (ZB2), as non-valve-overlap values (NVOV1, NVOV2) of the first and second cylinder lines (ZB1, ZB2), in at least one operating situation, in which the valve overlap (VO) is so small that it has no influence on a torque, which is transmitted by the combustion of the air/fuel mixture in the cylinders (Z1-Z8) to the crankshaft (8),
- to detect values of the variable, which is representative of the torque generated by the first cylinder line (ZB1) and on the other hand by the second cylinder line (ZB2), as valve-overlap values (VOV1, VOV2) of the first and second cylinder lines (ZB1, ZB2), in at least one further operating situation, in which the valve overlap (VO) is so great that it has an influence on the torque, which is transmitted by the combustion of the air/fuel mixture in the cylinders (Z1-Z8) to the crankshaft (8), and
- to determine a correction value (COR1) for the adjustment facility (19) assigned to the first cylinder line (ZB1) and/or a correction value (COR2) for the adjustment facility (20) assigned to the second cylinder line (ZB2) as a function of the valve-overlap values (VOV1, VOV2) and non-valve-overlap values (NVOV1, NVOV2) of the first and second cylinder lines (ZB1, ZB2), and
- to activate the adjustment facility (19, 20) of the first and/or second cylinder line (ZB1, ZB2) as a function of the correction values (COR1, COR2) assigned to them.

## Revendications

1. Procédé de commande d'un moteur à combustion interne comportant des première et seconde rangées de cylindres (ZB1, ZB2) comportant chacune un arbre à cames (18a, 18c) pour les soupapes d'admission des gaz (12) et un autre arbre à cames pour les soupapes d'échappement des gaz (13) des cylindres (Z1
- Z8) associés aux rangées de cylindres respectives (ZB1, ZB2), chacune de celles-ci comprenant également un dispositif de réglage (19, 20) pour régler un chevauchement des soupapes (VO) entre les soupapes d'admission des gaz (12) et les soupapes d'échappement des gaz (13), à chaque rangée de cylindres (ZB1, ZB2) étant associé un régulateur de lambda (46, 47) dont la grandeur de réglage agit sur au moins un organe de réglage associé à la rangée de cylindres respective (ZB1, ZB2), procédé au cours duquel
- dans au moins une situation de fonctionnement au cours de laquelle le chevauchement des soupapes (VO) est petit au point de ne pas avoir d'influence sur les grandeurs de réglage, des valeurs des grandeurs de réglage sont déterminées en tant que non-valeurs de chevauchement des soupapes (NVOV1, NVOV2) des première et seconde rangées de cylindres (ZB1, ZB12),
- dans au moins une autre situation de fonctionnement, au cours de
laquelle le chevauchement des soupapes (VO) est grand au point d'avoir une influence sur les grandeurs de réglage, des valeurs des grandeurs de réglage sont déterminées en tant que valeurs de chevauchement des soupapes (VOV1, VOV2) des première et seconde rangées de cylindres (ZB1, ZB2) et
- en fonction des valeurs de chevauchement des soupapes (VOV1, VOV2) et des non-valeurs de chevauchement des soupapes (NVOV1, NVOV2) des première et seconde rangées de cylindres (ZB1, ZB2), une valeur de correction (COR1) est engendrée pour le dispositif de réglage (19) associé à la première rangée de cylindres (ZB1) et/ou une valeur de correction (COR2) est engendrée pour le dispositif de réglage (20) associé à la seconde rangée de cylindres (ZB2), et
le dispositif de réglage (19, 20) de la première et/ou de la seconde rangée de cylindres (ZB1, ZB2) est commandé en fonction des valeurs de correction (COR1, COR2) qui leur sont associées.

2. Procédé selon la revendication 1, au cours duquel la production des valeurs de chevauchement des soupapes (VOV1, VOV2) et des non-valeurs de chevauchement des soupapes (NVOV1, NVOV2) est démarrée quand les grandeurs de réglage des première et seconde rangées de cylindres (ZB1, ZB2) ont un écart entre elles dépassant une valeur de seuil de lambda prédéterminée (THD_LAM).

3. Procédé de commande d'un moteur à combustion interne comportant une première et une seconde rangées de cylindres (ZB1, ZB2) comportant chacune un arbre à cames (18a, 18c) pour les soupapes d'admission des gaz (12) et un autre arbre à cames pour les soupapes d'échappement des gaz (13) des cylindres (Z1 - Z8) associés aux rangées de cylindres respectives (ZB1, ZB2), chacune de celles-ci comprenant également un dispositif de réglage (19, 20) pour régler un chevauchement des soupapes (VO) entre les soupapes d'admission des gaz (12) et les soupapes d'échappement des gaz (13), dans lequel à chaque rangée de cylindres (ZB1, ZB2) étant associé un régulateur de lambda (46, 47) dont la grandeur de réglage agit sur au moins un organe de réglage associé à la rangée de cylindres respective (ZB1, ZB2), procédé au cours duquel
- dans au moins une situation de fonctionnement au cours de laquelle le chevauchement des soupapes (VO) est petit au point de ne pas avoir d'influence sur un couple de rotation transmis au vilebrequin (8) par la combustion d'un mélange air-combustible dans les cylindres (Z1 - Z8), des valeurs d'une grandeur représentant le couple de rotation engendré par la première rangée de cylindres (ZB1) et d'autre part par la seconde rangée de cylindres (ZB2), sont déterminées comme des non-valeurs de chevauchement des soupapes (NVOV1, NVOV2) des première et seconde rangées de cylindres (ZB1, ZB2),
- dans au moins une autre situation de fonctionnement, au cours de
laquelle le chevauchement des soupapes (VO) est grand au point d'avoir une influence sur le couple de rotation transmis au vilebrequin (8) par la combustion d'un mélange air-combustible dans les cylindres (Z1 - Z8), des valeurs d'une grandeur représentant le couple de rotation engendré par la première rangée de cylindres (ZB1) et d'autre part par la seconde rangée de cylindres (ZB2), sont déterminées en tant que valeurs de chevauchement des soupapes (VOV1, VOV2) des première et seconde rangées de cylindres (ZB1, ZB2) et
- en fonction des valeurs de chevauchement des soupapes (VOV1, VOV2) et des non-valeurs de chevauchement des soupapes (NVOV1, NVOV2) des première et seconde rangées de cylindres (ZB1, ZB2), une valeur de correction (COR1) est engendrée pour le dispositif de réglage (19) associé à la première rangée de cylindres (ZB1) et/ou une valeur de correction (COR2) est engendrée pour le dispositif de réglage (20) associé à la seconde rangée de cylindres (ZB2), et
le dispositif de réglage (19, 20) de la première et/ou de la seconde rangée de cylindres (ZB1, ZB2) est commandé en fonction des valeurs de correction (COR1, COR2) qui leur sont associées

4. Procédé selon la revendication 3 au cours duquel la production des valeurs de chevauchement des soupapes (VOV1, VOV2) et des non-valeurs de chevauchement des soupapes (NVOV1, NVOV2) est démarrée quand les valeurs de la grandeur représentant le couple de rotation engendré par la première rangée de cylindres (ZB1) et d'autre part par la seconde rangée de cylindres (ZB2) ont un écart entre elles dépassant une valeur de seuil de couple de rotation prédéterminée (THD_TQ).

5. Procédé selon l'une des revendications 3 ou 4, au cours duquel la grandeur représentant le couple de rotation engendré par la première rangée de cylindres (ZB1) et d'autre part par la seconde rangée de cylindres (ZB2), est un gradient de nombres de tours (N_GRD1, N_GRD2).

6. Procédé selon l'une des revendications précédentes, au cours duquel les valeurs de correction (COR1, COR2) sont calculées en fonction de valeurs de chevauchement des soupapes (VOV1_M, VOV2_M) et de non-valeurs de chevauchement des soupapes (NVOV1_M, NVOV2_M), valeurs qui sont moyennées sur des valeurs de chevauchement des soupapes (VOV1, VOV2) et des non-valeurs de chevauchement des soupapes (NVOV1, NVOV2) relevées jusqu'à concurrence d'un nombre prédéterminé ou pendant un intervalle de temps prédéterminé.

7. Procédé selon l'une des revendications précédentes, au cours duquel la correction de la commande du dispositif de réglage (19, 20) ou des dispositifs de réglage (19, 20) est réalisée de façon adaptative.

8. Dispositif de commande d'un moteur à combustion interne comportant des première et seconde rangées de cylindres (ZB1, ZB2) comportant chacune un arbre à cames (18a, 18c) pour les soupapes d'admission des gaz (12) et un autre arbre à cames pour les soupapes d'échappement des gaz (13) des cylindres (Z1 - Z8) associés aux rangées de cylindres respectives (ZB1, ZB2), chacune de celles-ci comprenant également un dispositif de réglage (19, 20) pour régler un chevauchement des soupapes (VO) entre les soupapes d'admission des gaz (12) et les soupapes d'échappement des gaz (13), à chaque rangée de cylindres (ZB1, ZB2) étant associé un régulateur de lambda (46, 47) dont la grandeur de réglage agit sur au moins un organe de réglage associé à la rangée de cylindres respective (ZB1, ZB2), le dispositif étant agencé pour
- déterminer des valeurs des grandeurs de réglage en tant que non-valeurs de chevauchement des soupapes (NVOV1, NVOV2) des première et seconde rangées de cylindres (ZB1, ZB2) dans au moins une situation de fonctionnement au cours de laquelle le chevauchement des soupapes (VO) est petit au point de ne pas avoir d'influence sur les grandeurs de réglage,
- déterminer des valeurs des grandeurs de réglage en tant que valeurs de chevauchement des soupapes (VOV1, VOV2) des première et seconde rangées de cylindres (ZB1, ZB2) dans au moins une autre situation de fonctionnement, au cours de laquelle le chevauchement des soupapes (VO) est grand au point d'avoir une influence sur les grandeurs de réglage, et
- engendrer en fonction des valeurs de chevauchement des soupapes (VOV1, VOV2) et des non-valeurs de chevauchement des soupapes (NVOV1, NVOV2) des première et seconde rangées de cylindres (ZB1, ZB2), une valeur de correction (COR1) pour le dispositif de réglage (19) associé à la première rangée de cylindres (ZB1) et/ou une valeur de correction (COR2) pour le dispositif de réglage (20) associé à la seconde rangée de cylindres (ZB2), et
- commander le dispositif de réglage (19, 20) de la première et/ou de la seconde rangée de cylindres (ZB1, ZB2) en fonction des valeurs de correction (COR1, COR2) qui leur sont associées.

9. Dispositif de commande d'un moteur à combustion interne comportant des première et seconde rangées de cylindres (ZB1, ZB2) comportant chacune un arbre à cames (18a, 18c) pour les soupapes d'admission des gaz (12) et un autre arbre à cames pour les soupapes d'échappement des gaz (13) des cylindres (Z1 - Z8) associés aux rangées de cylindres respectives (ZB1, ZB2), chacune de celles-ci comprenant également un dispositif de réglage (19, 20) pour régler un chevauchement des soupapes (VO) entre les soupapes d'admission des gaz (12) et les soupapes d'échappement des gaz (13), à chaque rangée de cylindres (ZB1, ZB2) étant associé un régulateur de lambda (46, 47) dont la grandeur de réglage agit sur au moins un organe de réglage associé à la rangée de cylindres respective (ZB1, ZB2), le dispositif étant agencé pour
- déterminer, dans au moins une situation de fonctionnement au cours de laquelle le chevauchement des soupapes (VO) est petit au point de ne pas avoir d'influence sur un couple de rotation transmis au vilebrequin (8) par la combustion d'un mélange air-combustible dans les cylindres (Z1
- Z8), des valeurs d'une grandeur représentant le couple de rotation engendré par la première rangée de cylindres (ZB1) et d'autre part par la seconde rangée de cylindres (ZB2), en tant que non-valeurs de chevauchement des soupapes (NVOV1, NVOV2) des première et seconde rangées de cylindres (ZB1, ZB2),
- déterminer, dans au moins une autre situation de fonctionnement, au cours de laquelle le chevauchement des soupapes (VO) est grand au point d'avoir une influence sur le couple de rotation transmis au vilebrequin (8) par la combustion d'un mélange air-combustible dans les cylindres (Z1
- Z8), des valeurs d'une grandeur représentant le couple de rotation engendré par la première rangée de cylindres (ZB1) et d'autre part par la seconde rangée de cylindres (ZB2), en tant que valeurs de chevauchement des soupapes (VOV1, VOV2) des première et seconde rangées de cylindres (ZB1, ZB2), et
- engendrer en fonction des valeurs de chevauchement des soupapes (VOV1, VOV2) et des non-valeurs de chevauchement des soupapes (NVOV1, NVOV2) des première et seconde rangées de cylindres (ZB1, ZB2), une valeur de correction (COR1) pour le dispositif de réglage (19) associé à la première rangée de cylindres (ZB1) et/ou une valeur de correction (COR2) pour le dispositif de réglage (20), associé à la seconde rangée de cylindres (ZB2), et
- commander le dispositif de réglage (19, 20) de la première et/ou de la seconde rangée de cylindres (ZB1, ZB2) en fonction des valeurs de correction (COR1, COR2) qui leur sont associées.
